# EUROPEAN PATENT APPLICATION

(11) **EP 4 421 053 A1**
(43) Date of publication of application: **28.08.2024**
(21) Application number: 21962232.1
(22) Date of filing: 16.12.2021
(51) Int. Cl.: C04B 37/00

(54) **SILICON CARBIDE JOINT AND METAL PENETRATION CONNECTION METHOD THEREFOR**

(30) Priority: 29.10.2021 CN 202111275958
(71) Applicant: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: WU, Lixiang, Shenzhen, Guangdong 518031 (CN); XUE, Jiaxiang, Shenzhen, Guangdong 518031 (CN); LIAO, Yehong, Shenzhen, Guangdong 518031 (CN); REN, Qisen, Shenzhen, Guangdong 518031 (CN); ZHAI, Jianhan, Shenzhen, Guangdong 518031 (CN); ZHANG, Yongdong, Shenzhen, Guangdong 518031 (CN); ZHANG, Xiansheng, Shenzhen, Guangdong 518031 (CN)
(74) Representative: Westphal, Mussgnug & Partner, Patentanwälte mbB
(86) International application number: PCT/CN2021/138611
(87) International publication number: WO 2023/070889

(57) **Abstract**

A silicon carbide joint and a metal penetration connection method therefor. The metal penetration connection method comprises the following steps: S1.formulating a first metal raw material and a second metal raw material to form a connection material; S2.arranging the connection material between the connection faces of two silicon carbide parts, so that the connection material and the two silicon carbide parts form a sandwich structure; S3.placing the sandwich structure in a sintering environment having a metal phase and sintering same, wherein during the sintering process, the metal phase penetrates into the connection material and fills air holes generated in the connection material; and S4.after sintering, densifying the connection material to form a connection layer, so as to connect the two silicon carbide parts to form a silicon carbide joint. According to the metal penetration connection method for the silicon carbide joint, the metal phase penetrates into the connection material, so that the densification of the connection material is achieved, the silicon carbide joint with high strength connection and good air tightness is obtained, and the requirements for the shape, structure, etc., of silicon carbide are reduced.

## Description

### FIELD

The invention relates to the technical field of ceramic material joining, and particularly relates to a silicon carbide joint and a metal infiltration joining method of a silicon carbide joint.

### BACKGROUND

Silicon carbide ceramics have high melting points and excellent mechanical, thermal, and corrosion resistance properties, which makes them widely applied in fields such as vehicles, marine engineering, nuclear energy, aerospace and so on. The above applications not only require silicon carbide to have good high-temperature resistance but also impose high demands on its shape and structure. Brazing can be performed under low temperature and low pressure conditions to meet the shape and structure requirements of silicon carbide, but most brazing materials can only be used under low-temperature conditions.

The current researches have shown that Ti-Si brazing have good high-temperature resistance, but this joining technology can only be used to prepare high-strength silicon carbide joints under high-vacuum conditions, and when performing the joining in a graphite heating furnace, the decomposition of the MAX phase of intermediate layer is accelerated and the joining strength is significantly reduced, limiting the application of this technology in the field of silicon carbide joining. Additionally, when performing Ti-Si brazing for silicon carbide, the requirements for processing plane of the silicon carbide are more demanding, and there are requirements for the material of the silicon carbide itself, which requires the silicon carbide material to have free carbon, and high-purity silicon carbide is not conducive to the preparation of high-strength silicon carbide joints, thus also limiting the application in the field of silicon carbide joining.

### SUMMARY

The technical problem to be addressed by the invention is to provide a metal infiltration joining method of a silicon carbide joint that improves the strength of the joining structure and the silicon carbide joint obtained by the joining.

The technical solution adopted by the invention to solve the above technical problem is to provide a metal infiltration joining method of a silicon carbide joint including the following steps:
S1, preparing a first metal raw material and a second metal raw material to form a joining material;
S2, placing the joining material between the joining surfaces of two silicon carbide members to form a sandwich structure;
S3, placing the sandwich structure in a sintering environment with a metal phase and sintering;
during sintering, the metal phase infiltrates into the joining material and fills the pores generated in the joining material;
S4, after sintering, densifying the joining material to form a joining layer and joining the two silicon carbide members to form a silicon carbide joint.

Preferably, in step S1, the molar ratio of the first metal raw material to the second metal raw material is 0.1: 1 to 2:1.

Preferably, the first metal raw material is at least one of metal foil and metal powder.

Preferably, in step S1, the first metal raw material includes at least one of titanium, tantalum, molybdenum, niobium, and yttrium.

Preferably, in step S1, the second metal raw material is metal powder, including at least one of aluminum powder and silicon powder.

Preferably, the first metal raw material is metal foil, and the second metal raw material is metal powder; in step S1, placing the metal powder on opposite sides of the metal foil to form a joining material.

Preferably, in step S1, mixing the metal powder with an organic solvent first to form a slurry and then applying to opposite sides of the metal foil.

Preferably, the organic solvent includes at least one of anhydrous ethanol, acetone, and xylene; and the application is performed by at least one of spray coating, dip-coating, and screen printing.

Preferably, both the first metal raw material and the second metal raw material are metal powder; in step S1, adding the first metal raw material and the second metal raw material in an organic solvent and mixing to form a joining material.

Preferably, in step S 1, the mixing is performed by one or more of ball milling, magnetic stirring, mechanical stirring, and ultrasonic mixing.

Preferably, the organic solvent includes at least one of anhydrous ethanol, acetone, and xylene.

Preferably, in step S3, during sintering, the temperature is raised at a rate of 1°C/min to 20°C/min to a temperature of 1000°C to 1800°C and held for 0.5h to 4h.

Preferably, in step S3, the metal phase includes at least one of iron, cobalt, nickel, chromium, manganese, tungsten, titanium, zirconium, hafnium, vanadium, tantalum, molybdenum, niobium, and yttrium.

Preferably, in step S3, the metal phase is metal powder or metal block.

Preferably, step S3 includes: placing the sandwich structure and the metal phase into a crucible and then placing the crucible into a sintering furnace for sintering.

Preferably, the crucible is a graphite crucible, boron nitride crucible, aluminium oxide crucible or agate crucible.

Preferably, in step S4, the thickness of the joining layer is 10µm to 100µm.

A silicon carbide joint is further provided, which is formed by using the metal infiltration joining method as described in any one of the foregoing.

The metal infiltration joining method of a silicon carbide joint of the present invention achieves densification of the joining material by infiltrating the metal phase into the joining material, resulting in a silicon carbide joint with high strength and good hermeticity, and reducing the requirements for shape and structure of silicon carbide.

The present invention can be performed at low temperature and low pressure, thereby reducing the preparation conditions of silicon carbide joints.

### BRIEF DESCRIPTION OF THE DRAWINGS

The invention will be further described below in conjunction with accompanying drawings and embodiments. In the drawings,
FIG. 1 is a electron scanning microscope image of a silicon carbide joint prepared by Embodiment 1 of the invention.
FIG. 2 is an partial enlarged structure view of FIG. 1.
FIG. 3 is a electron scanning microscope image of a silicon carbide joint prepared by Comparative Embodiment 1 of the invention.

### DESCRIPTION OF THE EMBODIMENTS

The metal infiltration joining method of a silicon carbide joint of the present invention includes the following steps:

S1, preparing a first metal raw material and a second metal raw material to form a joining material.

The first metal raw material may include at least one of titanium, tantalum, molybdenum, niobium, and yttrium. The second metal raw material includes at least one of aluminum and silicon. Moreover, the purity of each metal in the first metal raw material and the second metal raw material is required to be above 99%, that is, 99%-99.999%.

The first metal raw material can be the form of at least one of metal foil and metal powder. The second metal raw material is preferably metal powder, such as aluminum powder, silicon powder.

In the joining material, the molar ratio of the first metal raw material to the second metal raw material is 0.1:1 to 2:1, preferably 0.5:1 to 1.6:1.

In one preparation method of the joining material, the first metal raw material is metal foil and the second metal raw material is metal powder. The metal powder is placed on the opposite sides of the metal foil to form the joining material. To ensure that the metal powder can be attached to the metal foil, the metal powder is first mixed with an organic solvent to form a slurry and then applied to the opposite sides of the metal foil. The organic solvent includes at least one of anhydrous ethanol, acetone, and xylene. The application is performed by at least one of spray coating, dip-coating, and screen printing.

In another preparation method of the joining material, both the first metal raw material and the second metal raw material are metal powder, and the second metal raw material and the second metal raw material are added to an organic solvent and mixed to form the joining material. The organic solvent includes at least one of anhydrous ethanol, acetone, and xylene. The mixing is performed by one or more of ball milling, magnetic stirring, mechanical stirring, and ultrasonic mixing.

S2, placing the joining material between the joining surfaces of two silicon carbide members to form a sandwich structure. The sandwich structure is embodied in the stacking as: silicon carbide member/joining material/silicon carbide member.

S3, placing the sandwich structure in a sintering environment with a metal phase and sintering.

For the selection of the metal phase, structurally, it can be metal powder or metal block, and so on. In terms of metal types, the metal phase includes at least one of iron, cobalt, nickel, chromium, manganese, tungsten, titanium, zirconium, hafnium, vanadium, tantalum, molybdenum, niobium, and yttrium.

Specifically, step S3 may include: placing the sandwich structure and the metal phase into a crucible and then placing the crucible into a sintering furnace for sintering. The crucible is a graphite crucible, boron nitride crucible, aluminium oxide crucible or agate crucible.

The sintering atmosphere is vacuum or inert gas protective atmosphere. During sintering, the temperature is raised at a rate of 1°C/min to 20°C/min to a temperature of 1000°C to 1800°C and held for 0.5h to 4h. According to the control of sintering temperature, it is controlled below 1500°C, and there is no need to apply a certain joining pressure to the sandwich structure, thus realizing the silicon carbide joining at low temperature and low pressure (no pressure).

During sintering, the metal phase infiltrates into the joining material and fills the pores generated in the joining material, and combines with the joining material to join the two silicon carbide members together. The principle of joining is as follows: when the saturated vapor pressure of metals such as iron, cobalt and nickel is lower than the ambient gas pressure (internal pressure of the crucible), the reaction of Ti, Si and SiC matrix mainly occurs to generate Ti₃SiC₂ phase in the corresponding temperature range. With the temperature further increased, when the saturated vapor pressure of the above metals is higher than the ambient gas pressure, while the metal phase infiltrates into the joining material, it promotes the decomposition of Ti₃SiC₂ phase to generate pores, and the infiltrated metal phase further fills the pores generated above to achieve densification of the joining material.

S4, after sintering, densifying the joining material to form a joining layer and joining the two silicon carbide members to form a silicon carbide joint.

In the silicon carbide joint, the thickness of the joining layer is 10µm to 100µm.

The silicon carbide joint formed by the metal infiltration joining method of the present invention has a shear strength of 50 MPa to 150MPa at room temperature and a sheat strength of 80 MPa to 200MPa at a high temperature of 1200°C, and a leakage rate of 0 to 1×10⁻⁸ Pa L/s, with good hermeticity.

The silicon carbide joint of the present invention is suitable for use in the field of nuclear radiation protection, for example, applied to SiC cladding, to achieve joining between SiC end plugs and SiC cladding tubes.

The present invention is further described below by way of specific embodiments.

### Embodiment 1

Metal Ti foil (with a thickness of 10µm and a purity of 99.99%) and Si powder (with a particle size of 1µm and a purity of 99.999%) are used as raw materials for the joining material. After polishing the metal Ti foil with sandpaper, Si powder is applied to both sides of the metal Ti foil, and the molar ratio of metal Ti foil to Si powder is 2:3. The above metal Ti foil and Si powder are placed between silicon carbide to form a sandwich structure. In a graphite crucible, the above sandwich structure is placed around iron, cobalt and nickel blocks, and then the graphite crucible is placed in a sintering furnace for sintering. During sintering, the temperature is raised to 1500 °C at a rate of 20°C/min and held for 1h with a sintering atmosphere of vacuum to obtain a silicon carbide joint.

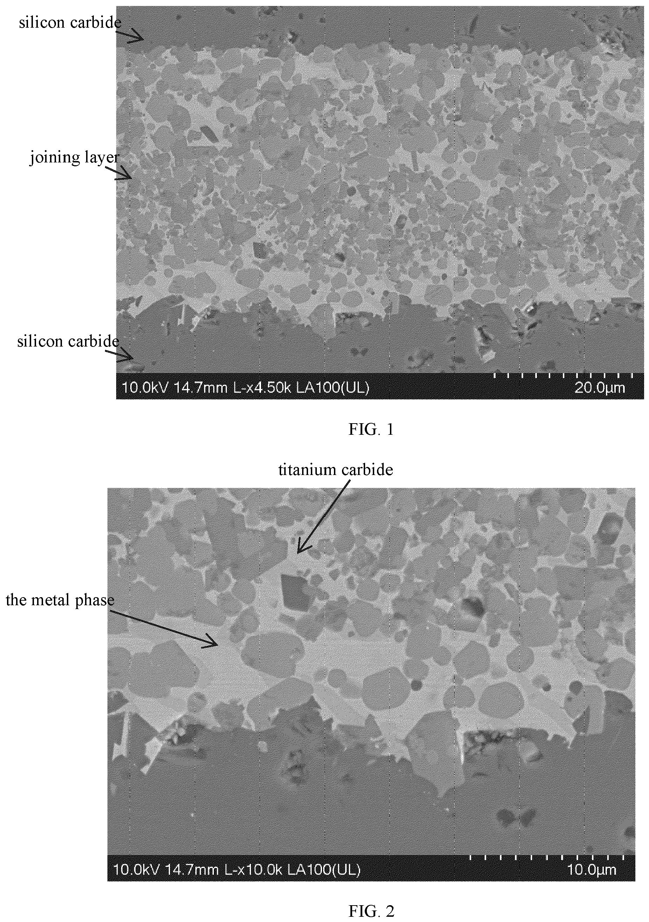

The electron scanning microscope image of the obtained silicon carbide joint is shown in Fig. 1. It can be seen from Fig. 1 that the joining layer between the two silicon carbides is densely distributed, and the thickness of the joining layer is 40µm. Further analyzed by high magnification electron microscope, as shown in Fig. 2, the joining layer is tightly combined with the silicon carbide interface. In the joining layer, the black phase is titanium carbide, and the white phase is iron, cobalt and nickel metal phase.

Shear strength tests are performed on the above silicon carbide joint, and the results show that the shear strength of the joint reaches 90 MPa at room temperature and 100 MPa at a high temperature of 1200°C. The leakage rate of the silicon carbide joint is 1×10⁻¹⁰ Pa·L/s.

### Embodiment 2

Metal Mo (with a thickness of 20µm and a purity of 99.99%) and Si powder (with a particle size of 5µm and a purity of 99.999%) are used as raw materials for the joining material. The joining of silicon carbide is achieved according to the method of Embodiment 1. During sintering, the temperature is 1600 °C and held for 2h with a sintering atmosphere of argon to obtain a silicon carbide joint with a dense joining layer.

The thickness of the joining layer of the silicon carbide joint obtained above is 60µm. In the shear strength test, the shear strength at room temperature of the joint is 120MPa, and the shear strength at a high temperature of 1200°C of the joint is 150MPa. The leakage rate of the silicon carbide joint is 1×10⁻⁹ Pa·L/s.

### Embodiment 3

Metal Ta (with a thickness of 20µm and a purity of 99.99%) and Al powder (with a particle size of 20µm and a purity of 99.999%) are used as raw materials for the joining material. The joining of silicon carbide is achieved according to the method of Embodiment 1. During sintering, the temperature is 1700 °C and held for 2h with a sintering atmosphere of argon to obtain a silicon carbide joint with a dense joining layer.

The thickness of the joining layer of the silicon carbide joint obtained above is 50µm. In the shear strength test, the shear strength at room temperature of the joint is 150MPa, and the shear strength at a high temperature of 1200°C of the joint is 200MPa. The leakage rate of the silicon carbide joint is 1×10⁻⁸ Pa·L/s.

### Embodiment 4

Metal Nb powder (with a particle size of 20µm and a purity of 99.999%) and Al powder (with a particle size of 30µm and a purity of 99.999%) are used as raw materials for the joining material. The joining of silicon carbide is achieved according to the method of Embodiment 1. During sintering, the temperature is 1550 °C and held for 2h with a sintering atmosphere of argon to obtain a silicon carbide joint with a dense joining layer.

The thickness of the joining layer of the silicon carbide joint obtained above is 90µm. In the shear strength test, the shear strength at room temperature of the joint is 80MPa, and the shear strength at a high temperature of 1200°C of the joint is 120MPa. The leakage rate of the silicon carbide joint is 1×10⁻¹⁰ Pa·L/s.

### Embodiment 5

Metal Y powder (with a particle size of 10µm and a purity of 99.999%) and Si powder (with a particle size of 5µm and a purity of 99.999%) are used as raw materials for the joining material. The joining of silicon carbide is achieved according to the method of Embodiment 1. During sintering, the temperature is 1700 °C and held for 2h with a sintering atmosphere of argon to obtain a silicon carbide joint with a dense joining layer.

The thickness of the joining layer of the silicon carbide joint obtained above is 70µm. In the shear strength test, the shear strength at room temperature of the joint is 130MPa, and the shear strength at a high temperature of 1200°C of the joint is 150MPa. The leakage rate of the silicon carbide joint is 1×10⁻⁹ Pa·L/s.

### Embodiment 6

Metal Ti powder (with a particle size of 5µm and a purity of 99.999%) and Si powder (with a particle size of 1µm and a purity of 99.999%) are used as raw materials for the joining material. The molar ratio of Ti to Si is 3:2. The joining of silicon carbide is achieved according to the method of Embodiment 1. During sintering, the temperature is 1550 °C and held for 2h with a sintering atmosphere of argon to obtain a silicon carbide joint with a dense joining layer.

The thickness of the joining layer of the silicon carbide joint obtained above is 50µm. In the shear strength test, the shear strength at room temperature of the joint is 150MPa, and the shear strength at a high temperature of 1200°C of the joint is 160MPa. The leakage rate of the silicon carbide joint is 1×10⁻¹⁰ Pa·L/s.

### Comparative Embodiment 1

Metal Ti foil (with a thickness of 10µm and a purity of 99.99%) and Si powder (with a particle size of 1µm and a purity of 99.999%) are used as raw materials for the joining material. After polishing the metal Ti foil with sandpaper, Si powder is applied to both sides of the metal Ti foil, and the molar ratio of metal Ti foil to Si powder is 2:3. The above metal Ti foil and Si powder are placed between silicon carbide to form a sandwich structure. The above sandwich structure is directly placed in a graphite crucible, and then the graphite crucible is placed in a sintering furnace for sintering.

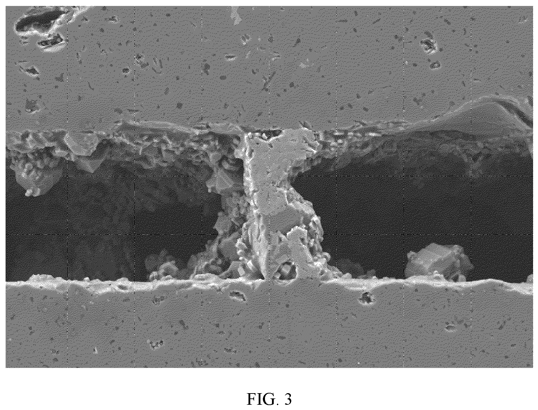

During sintering, the temperature is raised to 1500 °C at a rate of 20°C/min and held for 1h with a sintering atmosphere of vacuum. The electron scanning microscope image of the obtained silicon carbide joint after sintering is shown in Fig. 3.

The thickness of the joining layer of the silicon carbide joint is 60µm. From Figure 3, it can be seen that the joining layer located between the silicon carbides shows almost pore structure distribution. Shear strength tests are performed on the silicon carbide joint, and the results show that the shear strength at room temperature of the joint is less than 5 MPa, and the silicon carbide joint leaks, with hermeticity far lower than 1×10⁻⁵ Pa·L/s.

The above are only embodiments of the present invention and do not limit the scope of the present invention. Any equivalent structure or equivalent process transformation made based on the content of the specification and the accompanying drawings of the present invention, or direct or indirect application in other related technical fields, fall equally within the patent scope of the present invention.

## Claims

1. A metal infiltration joining method of a silicon carbide joint, **characterized by** comprising the following steps:
S1, preparing a first metal raw material and a second metal raw material to form a joining material;
S2, placing the joining material between the joining surfaces of two silicon carbide members to form a sandwich structure;
S3, placing the sandwich structure in a sintering environment with a metal phase and sintering; during sintering, the metal phase infiltrates into the joining material and fills the pores generated in the joining material;
S4, after sintering, densifying the joining material to form a joining layer and joining the two silicon carbide members to form a silicon carbide joint.

2. The metal infiltration joining method of a silicon carbide joint according to claim 1, **characterized in that** in step S1, the molar ratio of the first metal raw material to the second metal raw material is 0.1: 1 to 2:1.

3. The metal infiltration joining method of a silicon carbide joint according to claim 1, **characterized in that** the first metal raw material is at least one of metal foil and metal powder.

4. The metal infiltration joining method of a silicon carbide joint according to claim 3, **characterized in that** in step S1, the first metal raw material comprises at least one of titanium, tantalum, molybdenum, niobium, and yttrium.

5. The metal infiltration joining method of a silicon carbide joint according to claim 3, **characterized in that** in step S1, the second metal raw material is metal powder, comprising at least one of aluminum powder and silicon powder.

6. The metal infiltration joining method of a silicon carbide joint according to claim 5, **characterized in that** the first metal raw material is metal foil, and the second metal raw material is metal powder; in step S1, placing the metal powder on opposite sides of the metal foil to form a joining material.

7. The metal infiltration joining method of a silicon carbide joint according to claim 6, **characterized in that** in step S1, mixing the metal powder with an organic solvent first to form a slurry and then applying to opposite sides of the metal foil.

8. The metal infiltration joining method of a silicon carbide joint according to claim 7, **characterized in that** the organic solvent comprises at least one of anhydrous ethanol, acetone, and xylene; and the application is performed by at least one of spray coating, dip-coating, and screen printing.

9. The metal infiltration joining method of a silicon carbide joint according to claim 5, **characterized in that** both the first metal raw material and the second metal raw material are metal powder; in step S1, adding the first metal raw material and the second metal raw material in an organic solvent and mixing to form a joining material.

10. The metal infiltration joining method of a silicon carbide joint according to claim 9, **characterized in that** in step S1, the mixing is performed by one or more of ball milling, magnetic stirring, mechanical stirring, and ultrasonic mixing.

11. The metal infiltration joining method of a silicon carbide joint according to claim 9, **characterized in that** the organic solvent comprises at least one of anhydrous ethanol, acetone, and xylene.

12. The metal infiltration joining method of a silicon carbide joint according to claim 1, **characterized in that** in step S3, during sintering, the temperature is raised at a rate of 1°C/min to 20°C/min to a temperature of 1000°C to 1800°C and held for 0.5h to 4h.

13. The metal infiltration joining method of a silicon carbide joint according to claim 1, **characterized in that** in step S3, the metal phase comprises at least one of iron, cobalt, nickel, chromium, manganese, tungsten, titanium, zirconium, hafnium, vanadium, tantalum, molybdenum, niobium, and yttrium.

14. The metal infiltration joining method of a silicon carbide joint according to claim 1, **characterized in that** in step S3, the metal phase is metal powder or metal block.

15. The metal infiltration joining method of a silicon carbide joint according to claim 1, **characterized in that** step S3 comprises: placing the sandwich structure and the metal phase into a crucible and then placing the crucible into a sintering furnace for sintering.

16. The metal infiltration joining method of a silicon carbide joint according to claim 15, **characterized in that** the crucible is a graphite crucible, boron nitride crucible, aluminium oxide crucible or agate crucible.

17. The metal infiltration joining method of a silicon carbide joint according to claim 1, **characterized in that** in step S4, the thickness of the joining layer is 10µm to 100µm.

18. A silicon carbide joint, **characterized in that** the silicon carbide joint is formed by using the metal infiltration joining method according to any one of claims 1-17.
